# EUROPÄISCHE PATENTSCHRIFT

(11) **EP 1 415 272 B1**
(45) Veröffentlichungstag und Bekanntmachung des Hinweises auf die Patenterteilung: **11.01.2006**
(21) Anmeldenummer: 02767054.6
(22) Anmeldetag: 26.07.2002
(51) Int. Cl.: G06K 19/077

(54) **CHIPMODUL MIT ZUMINDEST STELLENWEISE TRANSPARENTEM SUBSTRAT**
CHIP MODULE COMPRISING AN AT LEAST PARTIALLY TRANSPARENT SUBSTRATE
MODULE A PUCE COMPRENANT UN SUBSTRAT AU MOINS TRANSPARENT PAR ENDROITS

(30) Priorität: 10.08.2001 DE 10139383
(43) Veröffentlichungstag der Anmeldung: 06.05.2004
(73) Patentinhaber: Infineon Technologies AG, 81669 München (DE)
(72) Erfinder: GUNDLACH, Harald, 82031 Grünwald (DE)
(74) Vertreter: Epping - Hermann - Fischer
(86) Internationale Anmeldenummer: PCT/DE2002/002758
(87) Internationale Veröffentlichungsnummer: WO 2003/017195

(56) Entgegenhaltungen:
- EP-A- 0 913 268
- DE-A- 4 314 879
- FR-A- 2 786 902

## Beschreibung

Die vorliegende Erfindung betrifft ein Chipmodul, das für die Verwendung bei Chipkarten vorgesehen ist und außer einem Chip über ein weiteres Bauelement verfügt.

Chipkarten sollen in Zukunft mit erweiterten Funktionen ausgestattet werden. Dazu gehört außer der Übertragung von Daten mittels elektrischer Datenleitungen auch eine Übermittlung von Informationen durch elektromagnetische Strahlen, die im einfachsten Fall zur optischen Wiedergabe von Informationen eingesetzt werden. In einer Chipkarte soll daher außer dem Chip ein weiteres Bauelement integriert sein, das für die Aufnahme, Abgabe, Reflexion oder partielle Abschirmung elektromagnetischer Strahlung vorgesehen ist. Es kann sich dabei um ein Anzeigeteil (Display) handeln, das selbst elektromagnetische Wellen im optischen Bereich abstrahlt oder wie im Fall einer LCD Licht reflektiert und/oder partiell abschirmt, um so eine optische Anzeige zu bewirken. Es kann sich außerdem bei diesem Bauelement um einen Sensor oder Detektor für Strahlung handeln, der dafür vorgesehen sein kann, eingestrahlte Informationen aufzunehmen, die z. B. durch eine geeignet modulierte elektromagnetische Welle übertragen wird. Das Bauelement kann ebenso modulierte elektromagnetische Wellen abgeben. Eine Übermittlung elektromagnetischer Strahlung zu der Chipkarte oder von der Chipkarte ins Auge des Betrachters oder in einen Detektor eines Terminals bietet daher eine Vielzahl von Möglichkeiten, die Funktionen einer Chipkarte zu erweitern. Mehr noch als bei herkömmlichen Chipmodulen tritt allerdings das Problem auf, dass außer dem Halbleiterchip ein weiteres Bauelement in einen Chipkartenkörper eingesetzt und dort ausreichend bruchsicher befestigt werden muss. Dieses Einsetzen und elektrische Kontaktieren des weiteren Bauelementes darf die Fertigungskosten und den Herstellungsaufwand nicht wesentlich erhöhen.

In der EP 0 913 268 A1 ist ein flexibles IC-Modul beschrieben, bei dem ein Chip und gegebenenfalls weitere Komponenten zwischen Schichten aus gewebeartigem Material angeordnet und damit verpresst sind. Das Modul ist für die Herstellung kontaktloser IC-Karten vorgesehen, bei denen die Signal- und E-nergieübermittlung mittels auf der Karte vorgesehener Antennenstrukturen erfolgt. Der IC-Chip, die spiralig angeordnete Leiterbahn der Antennenstruktur und die elektrische Verbindung zwischen Chip und Antenne sind zwischen zwei Schichten des Substratmateriales angeordnet. Einzelheiten zur Anordnung weiterer Bauelemente in diesem flexiblen Substrat sind nicht beschrieben.

In der FR 2 786 902 ist ein kontaktloses Modul zum Einsatz in Chipkarten beschrieben. Dieses Modul umfasst ein dielektrisches Substrat mit einer darauf aufgebrachten und als Antenne vorgesehenen Leiterbahnstruktur sowie einen darauf befestigten Halbleiterchip. Der Chip wird in einer Aussparung einer Chipkarte mittels eines Kunstharzes befestigt.

In der DE 43 14 879 A1 ist eine Speicherkarte aus einem lichtdurchlässigen Kartenmaterial beschrieben. Damit soll eine besondere optische Gestaltung der Chipkarte erreicht werden.

Aufgabe der vorliegenden Erfindung ist es, ein einfach herstellbares Chipmodul anzugeben, mit dem eine Chipkarte auf einfache Weise mit einem Chip sowie einer optischen Anzeige versehen werden kann.

Diese Aufgabe wird mit dem Chipmodul mit den Merkmalen des Anspruches 1 gelöst. Ausgestaltungen ergeben sich aus den abhängigen Ansprüchen.

Das Chipmodul umfasst einen Halbleiterchip, der auf einer Hauptseite eines flächig ausgedehnten Substrates befestigt ist, wobei dieses Substrat mit elektrisch leitenden Verbindungen auf derselben Hauptseite versehen ist. Eine optische Anzeigevorrichtungist auf derselben Hauptseite des Substrates angebracht. Der Halbleiterchip und die Anzeigevorrichtung sind an die elektrisch leitenden Verbindungen angeschlossen, so dass die Anzeigevorrichtung mit dem Halbleiterchip elektrisch verbunden ist. Wesentlich für das erfindungsgemäße Chipmodul ist, dass das Substrat eine lichtdurchlässige Folie ist.

Damit ist erreicht, dass das Chipmodul an einer Oberseite eines mit entsprechenden Aussparungen versehenen Kartenkörpers so angebracht werden kann, dass die den Bauelementen gegenüberliegende Hauptseite des Substrates eine Oberseite der damit ausgebildeten Chipkarte bildet. Der Chip und das weitere Bauelement befinden sich danach in den Aussparungen des Kartenkörpers, so dass die Chipkarte mit einer ebenen Oberseite hergestellt werden kann.

Das Chipmodul bietet daher eine einfach herstellbare verbundene Anordnung der wesentlichen Bestandteile. Der Chip und das damit verbundene weitere Bauelement sind gemeinsam an einem strahlungsdurchlässigen Substrat befestigt und können insgesamt in einen Kartenkörper eingesetzt werden. Das Substrat kann eine im vorgesehenen Wellenbereich für elektromagnetische Strahlung durchlässige Folie sein, bei bevorzugten Ausgestaltungen eine lichtdurchlässige Folie, die daher für das Anbringen einer optischen Anzeigevorrichtung geeignet ist. Es kann sich dabei um eine ohnehin für die Oberseite der LCD-Anzeige verwendete Polarisationsfolie handeln; es kann insbesondere eine Folie aus Polyethylenterephthalat (PET) sein. Die Strahlungsdurchlässigkeit braucht im Prinzip nur im Bereich des angebrachten Bauelementes vorhanden zu sein. Andere Bereiche des Substrates können abgedeckt oder in irgendeiner Weise so behandelt sein, dass dort die Strahlungsdurchlässigkeit verringert oder nicht mehr gewährleistet ist.

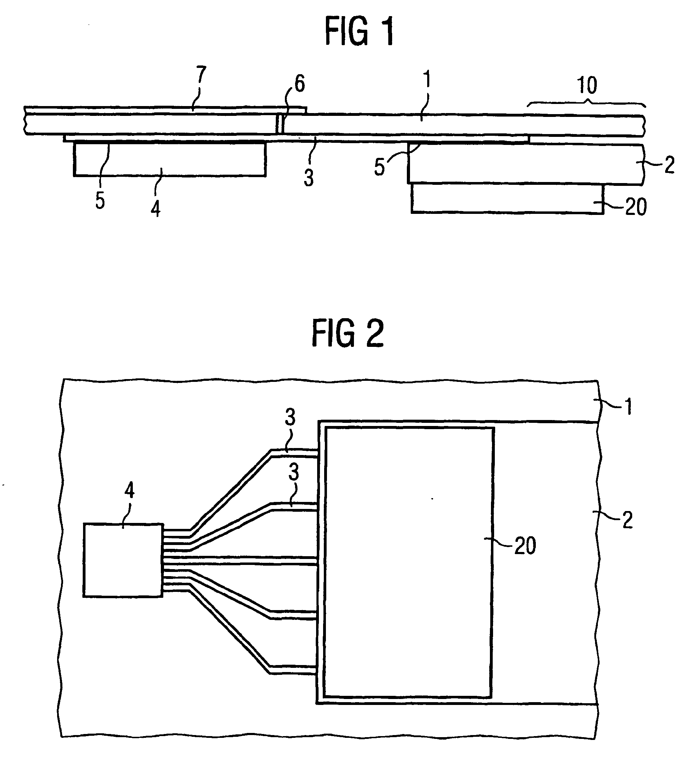

Es folgt eine genauere Beschreibung von Beispielen des Chipmoduls anhand der beigefügten Figuren 1 und 2.
Die Figur 1 zeigt einen Ausschnitt aus einem typischen Ausführungsbeispiel des Chipmoduls im Querschnitt.
Die Figur 2 zeigt die Anordnung gemäß der Figur 1 aus der Blickrichtung von unten.

In der Figur 1 ist eine Anordnung dargestellt, bei der auf einem Substrat 1 ein weiteres Bauelement 2, elektrisch leitende Verbindungen 3, ein Halbleiterchip 4, Klebstoffschichten 5, eine Durchkontaktierung 6, eine Kontaktfläche 7, und ein Treiberchip 20 für das weitere Bauelement vorhanden sind. Unabhängig von den möglichen einzelnen Ausführungsformen sind bei dem erfindungsgemäßen Chipmodul das Substrat 1, der Chip 4, das weitere Bauelement 2 und die elektrisch leitende Verbindung 3 vorhanden, wobei diese Komponenten auf derselben Hauptseite des flächig ausgedehnten Substrates 1 angebracht sind.

Die elektrisch leitenden Verbindungen 3 sind vorzugsweise Leiterbahnen aus einem elektrisch leitenden Material, die auf der betreffenden Hauptseite des Substrates 1 aufgebracht sind und zur elektrischen Verbindung zwischen dem Chip 4 und dem weiteren Bauelement 2 vorgesehen sind. Die Leiterbahnen können außerdem so strukturiert sein, dass zumindest ein Anteil der Leiterbahnen als Antenne fungiert, die für eine kontaktlose Übertragung von Daten und/oder Energie vorgesehen ist. Als Antennenstruktur ist eine Leiterspirale oder zumindest spiralartige Leiterstruktur geeignet. Je nach Ausführungsbeispiel kann aber auch nur ein Leiterbahnstreifen als Antenne vorgesehen sein.

Im Prinzip ist es möglich, Anschlusskontakte des Chips 4 und Anschlusskontakte des weiteren Bauelementes 2 mit Anschlussdrähten (Bonddrähten) mit dafür vorgesehenen Kontaktflächen der elektrisch leitenden Verbindungen 3 zu verbinden. Bei dem in der Figur 1 dargestellten bevorzugten Ausführungsbeispiel sind die Bauelemente nach Art einer Flip-Chip-Montage (FCOS, Flip-Chip On Substrate) auf den elektrisch leitenden Verbindungen 3 so aufgebracht, dass die Anschlusskontakte des Chips 4 bzw. des weiteren Bauelementes 2 mit den zugehörigen Leiterbahnen elektrisch leitend verbunden werden.

Dafür können die Klebstoffschichten 5 vorteilhaft eingesetzt werden. Ein Leitkleber ist ein mit elektrisch leitendem Füllstoff versehener Klebstoff. Dieser Füllstoff wird durch elektrisch leitende Partikel gebildet, z. B. durch kleine Metallkugeln. Wenn der Klebstoff in einer dünnen Schicht aufgebracht wird, stellen die leitenden Partikel elektrische Verbindungen vertikal zu der Ebene der Klebstoffschicht her. Die elektrisch leitenden Partikel sind in dem Klebstoff in einer solchen Dichte oder Konzentration vorhanden, dass in der Klebstoffschicht eine sehr dichte Anordnung derartiger vertikaler leitender Verbindungen ausgebildet wird, während andererseits eine laterale, d. h. innerhalb der Schichtebene ausgerichtete Verbindung, die zu einem Kurzschluss benachbarter Anschlüsse führen würde, verhindert ist.

Wenn es sich bei dem weiteren Bauelement 2 gemäß einem bevorzugten Ausführungsbeispiel um eine optische Anzeige, ein Display, handelt, ist dieses Bauelement vorzugsweise mit einem für dessen Funktionsfähigkeit vorgesehenen Treiber 20 versehen, der diejenige elektronische Schaltung enthält, die für die unmittelbare Funktionsweise des weiteren Bauelementes 2 erforderlich ist. Für die Ansteuerung des weiteren Bauelementes 2 ist jedoch der Chip 4 vorgesehen, der die für die vorgesehene Funktionsweise des Chipmoduls erforderlichen elektronischen Schaltungen enthält. Das ist insbesondere ein Controller oder Prozessor, der für eine Datenübertragung und Datenverarbeitung eingerichtet ist. Der Chip 4 steuert das weitere Bauelement 2 über die elektrisch leitenden Verbindungen 3 an. Der Chip 4 kann so in einem bevorzugten Ausführungsbeispiel, bei dem das weitere Bauelement eine Anzeigevorrichtung ist, den anzuzeigenden Dateninhalt an dieses Bauelement ausgeben.

Wenn das weitere Bauelement ein Sensor, speziell ein Strahlungsdetektor, ist, dient ein an das weitere Bauelement 2 angeschlossener Treiber 20 dazu, ein Messsignal aufzunehmen. Eine Auswertung eines Messsignals erfolgt dann ebenfalls vorzugsweise in dem Chip 4, an den das Signal über die elektrisch leitenden Verbindungen übermittelt wird.

Die Aufnahme, Abgabe, Reflexion oder partielle Abschirmung der elektromagnetischen Strahlung durch das weitere Bauelement 2 erfolgt auf dessen dem Substrat 1 zugewandter Seite. Die Funktion kann dieses weitere Bauelement 2 erfüllen, da das Substrat 1 zumindest in dem in der Figur 1 eingezeichneten Bereich 10 für die betreffende Strahlung in ausreichendem Umfang durchlässig ist.

Falls der Chip 4 über geeignete Kontakte mit externen Anschlüssen, z. B. eines Terminals oder dergleichen, verbunden werden können soll, kann mindestens eine Kontaktfläche 7 (z. B. aus Metall) vorgesehen sein, die wegen der vorgesehenen Verwendung des Chipmoduls vorzugsweise auf der von dem Chip 4 abgewandten weiteren Hauptseite des Substrates aufgebracht ist. Für den elektrischen Anschluss zwischen der Kontaktfläche und einem entsprechenden Anschlusskontakt des Chips kann eine Durchkontaktierung 6 vorgesehen sein, die eine elektrisch leitende Verbindung vertikal zu der Fläche des Substrates 1 durch das Substrat hindurch bildet und die elektrisch leitende Kontaktfläche 7 mit einem dafür vorgesehenen Anschlusskontakt des Chips 4 oder mit einer dafür vorgesehenen Leiterbahn oder elektrisch leitenden Verbindung 3 verbindet.

Die Anordnung der Komponenten des Chipmoduls ermöglicht es, die gesamte Anordnung in einen ansonsten homogenen Kartenkörper einzusetzen, indem z. B. die längs der Ränder des Substrates über den Chip 4 und das weitere Bauelement 2 hinausragenden Anteile des Substrates 1 auf einen eine Aussparung umgebenden äußeren Bereich einer Oberseite eines Kartenkörpers aufgeklebt werden. Die auf der Unterseite des Substrates angebrachten Bauelemente werden gegebenenfalls in der Aussparung des Kartenkörpers in eine Füllmasse oder einen Klebstoff eingebettet.

Weitergehende Ausführungsbeispiele sehen vor, dass das Substrat 1 mehrere Schichtlagen umfassen kann oder aus bereichsweise unterschiedlichen Materialien oder einem bereichsweise unterschiedlich ausgestalteten Material besteht. Das Substrat kann z. B. sowohl eine strahlungsdurchlässige Polarisationsschicht als auch eine eigens für die Trägerfunktion des Substrates vorgesehene Substratschicht umfassen. Falls diese Substratschicht nicht für die Strahlung durchlässig ist, muss im Bereich 10, in dem das weitere Bauelement angeordnet ist, eine Aussparung in der Substratschicht vorgesehen sein.

Das weitere Bauelement 2 kann, wie in der Figur 1 angedeutet ist, mit einem randseitigen Bereich der dem Substrat 1 zugewandten Oberseite an dem Substrat befestigt sein. Das weitere Bauelement kann statt dessen auch ganzflächig an dem Substrat 1 befestigt sein, wenn dafür ein für die vorgesehene Strahlung durchlässiges Material als Klebstoff verwendet wird. Der Treiber 20 kann auch integraler Bestandteil des weiteren Bauelementes 2 sein oder zwischen dem Substrat 1 und dem weiteren Bauelement 2 angeordnet sein. Der Abstand zwischen dem Substrat 1 und dem weiteren Bauelement 2 kann im Prinzip beliebig gering oder auch deutlich größer sein, als in der Figur 1, nicht maßstabsgetreu, wiedergegeben ist.

In der Figur 2 ist eine Aufsicht auf das Beispiel des Chipmoduls gemäß der Figur 1 aus einer Blickrichtung von unten dargestellt. Es ist in dieser Blickrichtung also der Treiber 20 auf der Unterseite des weiteren Bauelementes 2 erkennbar. Die elektrisch leitenden Verbindungen 3 zwischen dem Chip 4 und dem weiteren Bauelement 2 sind hier durch fünf vereinfacht dargestellte Leiterbahnen wiedergegeben. Die Größenrelationen zwischen dem Chip 4, dem weiteren Bauelement 2 und dem Treiber 20 sind nicht festgelegt. Der Chip 4 kann größer oder kleiner als in der Figur dargestellt ausgebildet sein. Ein Sensor als weiteres Bauelement 2 wird möglicherweise erheblich kleinere Abmessungen als der Chip 4 aufweisen. Eine optische Anzeige wird möglicherweise einen wesentlichen Bereich der Gesamtfläche des Substrates 1 umfassen. Diesen Ausgestaltungen sind im Rahmen der Erfindung keine grundsätzlichen Grenzen gesetzt. Es ist jedoch darauf zu achten, dass eine für die leichte Herstellbarkeit erforderliche Widerstandsfähigkeit und Bruchsicherheit des Chipmoduls gewährleistet ist.

### Bezugszeichenliste

- 1: Substrat
- 2: weiteres Bauelement
- 3: elektrisch leitende Verbindung
- 4: Halbleiterchip
- 5: Klebstoffschicht
- 6: Durchkontaktierung
- 7: Kontaktfläche
- 10: Bereich
- 20: Treiberchip

## Patentansprüche

1. Chipmodul
mit einem Halbleiterchip (4), der auf einer Hauptseite eines flächig ausgedehnten Substrates (1) befestigt ist,
mit mindestens einer elektrisch leitenden Verbindung (3) auf dieser Hauptseite, die mit einem Anschlusskontakt des Halbleiterchips verbunden ist, und
mit einem weiteren Bauelement (2) als optischer Anzeigevorrichtung auf der Hauptseite, das an die elektrisch leitende Verbindung angeschlossen ist,
**dadurch gekennzeichnet, dass**
das Substrat (1) eine lichtdurchlässige Folie ist und
das Substrat (1) Abmessungen für ein Anbringen an einer Oberseite eines für eine Chipkarte vorgesehenen Kartenkörpers aufweist.

2. Chipmodul nach Anspruch 1, bei dem
das Substrat eine Polarisationsfolie ist.

3. Chipmodul nach Anspruch 1, bei dem
das Substrat Polyethylenterephthalat ist.

4. Chipmodul nach einem der Ansprüche 1 bis 3, bei dem
auf einer der besagten Hauptseite gegenüberliegenden Hauptseite des Substrates mindestens eine Kontaktfläche (7) aus elektrisch leitendem Material aufgebracht ist und mittels einer durch das Substrat (1) gehenden Durchkontaktierung (6) mit der mindestens einen elektrisch leitenden Verbindung (3) verbunden ist.

5. Chipmodul nach einem der Ansprüche 1 bis 4, bei dem
der Halbleiterchip (4) und/oder das weitere Bauelement (2) mittels eines mit elektrisch leitendem Füllstoff versehenen Klebstoffs an dem Substrat befestigt und an die mindestens eine elektrisch leitende Verbindung (3) angeschlossen sind.

6. Chipmodul nach einem der Ansprüche 1 bis 5, bei dem
die elektrisch leitenden Verbindungen (3) eine als Antenne vorgesehene Leiterstruktur umfassen.

## Claims

1. Chip module
having a semiconductor chip (4), which is fixed on a main side of a substrate (1) of planar extent,
having at least one electrically conductive connection (3) on this main side, which is connected to a connecting contact of the semiconductor chip, and
having a further component (2) as optical display device on the main side, which is connected to the electrically conductive connection,
**characterized in that** the substrate (1) is a light transmissive film, and
the substrate (1) has dimensions for fitting at a top side of a card body provided for a smart card.

2. Chip module according to Claim 1, in which the substrate is a polarization film.

3. Chip module according to Claim 1, in which the substrate is polyethylene terephthalate.

4. Chip module according to one of Claims 1 to 3, in which at least one contact area (7) made of electrically conductive material is applied on a main side of the substrate opposite to said main side and is connected to the at least one electrically conductive connection (3) by means of a plated-through hole (6) passing through the substrate (1).

5. Chip module according to one of Claims 1 to 4, in which
the semiconductor chip (4) and/or the further component (2) are fixed at the substrate by means of an adhesive provided with electrically conductive filler and are connected to the at least one electrically conductive connection (3).

6. Chip module according to one of Claims 1 to 5, in which
the electrically conductive connections (3) comprise a conductor structure provided as an antenna.

## Revendications

1. Module à puce
comprenant une puce (4) à semi-conducteurs, qui est fixée sur une face principale d'un substrat (1) s'étendant à plat,
comprenant au moins une liaison (3) conductrice de l'électricité sur cette face principale, liaison qui est reliée à un contact de borne de la puce à semi-conducteurs, et
comprenant un autre composant (2) qui est raccordé à la liaison conductrice de l'électricité, en tant que dispositif d'affichage optique sur la face principale,
**caractérisé en ce que**
le substrat (1) est une feuille transparente et le substrat (1) a des dimensions permettant de le mettre sur une surface d'un corps de carte prévu pour une carte à puce.

2. Module à puce suivant la revendication 1, dans lequel
le substrat est une feuille de polarisation.

3. Module à puce suivant la revendication 1, dans lequel
le substrat est en poly(téréphtalate d'éthylène).

4. Module à puce suivant l'une des revendications 1 à 3, dans lequel il est déposé, sur une face principale opposée à ladite face principale du substrat, au moins une surface (7) de contact en un matériau conducteur de l'électricité, et cette face de contact est reliée, au moyen d'un contact (6) traversant le substrat (1), à la au moins une liaison (3) conductrice de l'électricité.

5. Module à puce suivant l'une des revendications 1 à 4, dans lequel la puce (4) à semi-conducteur et/ou l'autre composant (2) sont fixés au substrat au moyen d'une colle munie d'une matière de charge conductrice de l'électricité et sont raccordés à la au moins une ligne (3) conductrice de l'électricité.

6. Module à puce suivant l'une des revendications 1 à 5, dans lequel les lignes (3) conductrices de l'électricité comprennent une structure de conducteur prévue sous forme d'antenne.
